# EUROPEAN PATENT SPECIFICATION

(11) **EP 4 204 236 B1**
(45) Date of publication and mention of the grant of the patent: **25.12.2024**
(21) Application number: 21769923.0
(22) Date of filing: 25.08.2021
(51) Int. Cl.: B42D 3/06, B42B 5/06, B42F 1/00, B42D 1/06, B42F 1/06, B21D 11/10, B21D 39/02

(54) **A BOOK OR BOOKLET COVER AND A METHOD OF MAKING A BOOK OR BOOKLET COVER**
BUCH- ODER BROSCHÜRENABDECKUNG UND VERFAHREN ZUR HERSTELLUNG EINER BUCH- ODER BROSCHÜRENABDECKUNG
COUVERTURE DE LIVRE OU DE LIVRET ET PROCÉDÉ DE FABRICATION D'UNE COUVERTURE DE LIVRE OU DE LIVRET

(30) Priority: 28.08.2020 DK PA202070556
(43) Date of publication of application: 05.07.2023
(73) Proprietor: Scanavo A/S, 2630 Taastrup (DK)
(72) Inventor: SØLLING, Tino, 2680 Solrød Strand (DK)
(74) Representative: Zacco Denmark A/S
(86) International application number: PCT/EP2021/073461
(87) International publication number: WO 2022/043361

(56) References cited:
- EP-A1- 2 511 103
- KR-A- 20140 058 453
- US-A- 3 164 196
- US-A- 4 114 240
- US-A- 5 970 777

## Description

### Field of the invention

The present invention relates to a method of making a book or booklet cover including a metal sheet supporting a sheet-like information carrier.

The invention further relates to a book or booklet cover including a metal sheet supporting a sheet-like information carrier, which sheet has a first face and an opposite second face, with the first face of the sheet on a first side of a metal sheet, the metal sheet having a portion that extends beyond at least one edge of the sheet.

### Background of the invention

Among the many variations within the field of sheet-like information carriers there are a couple that should be mentioned in this context.

The traditional book comprising a cover and a number of content pages is very well-known.

Plastic boxes where a printed inlay is loosely placed inside the box, often together with other items, is likewise a well-known solution.

GB 2249859 discloses a media packaging where on the outside a number of leaves are placed for containing and displaying various information or artwork. Commonly known problems related to these information holding articles are the need to individualize the cover for the book in order to achieve the right dimensions and the ability to maintain the sides of the cover essentially parallel when the book is closed or have the inlay loosely placed in the cover.

DK 179915 B1 discloses an information holding article that may be manufactured in a standard size and being adapted for variations in the content and hence reduce the effort of individualising the information holding article. The information holding article comprising an inner part and an outer part, where the inner part comprises a number of pages adapted for holding printed information and optionally comprises one or more parts for holding an information carrying medium or an object, where the outer part comprises a plastic cover with a first and a second side element and where a back element is provided between the first and the second side element an being adapted for mutual pivotal movement between the back element and the first and/or the second side element, where the inner part is connected to the plastic cover at one of the first side element, the second side element or the back element, where the two side elements are spaced apart when the inner part is connected to the plastic cover, where the pages of the inner part has a thickness less than the width of the back element, and where the inner part is adapted to fit a the width of the back element by including, together with the pages, a thickness correcting element to the inner part. Here the metal cover is fastened to the book by gluing.

KR 2014 0058453 A discloses a holder for a calendar with a bent metal edge.

EP 2 511 103A1discloses a binding apparatus for edge binding, wherein the edge of a paper sheet is provided with a metal edge.

US 4 114 240 A discloses a back member including spring clamp elements.

### Objective of the invention

The object of the present invention is to therefore provide for a sheet-like information carrier that may be manufactured in a standard size and being adapted for variations in the content and hence reduce the effort of individualising the information holding article without need for using glue for attaching a cover in shape of a metal sheet to a sheet-like information carrier.

This is achieved by a method of making a book or booklet cover including a metal sheet supporting a sheet-like information carrier comprising the steps of: placing a first face of the sheet-like information carrier on a first side of a metal sheet, which metal sheet extends et least beyond one edge of the sheet; bending in a rounding way a portion of the metal sheet along an edge thereof, for said portion to bear against and to elastically press on said sheet, thereby forming the book or booklet cover, wherein the edge is bent in an angle of 270 degrees or more in relation to an unbent edge of the metal sheet.

By bending an edge of the metal sheet without bending it into a sharp bend in such a way that an outermost part or portion of the sheet along an edge is pressed against a surface of the second face of the sheet-like information carrier, holding the first face of the sheet-like information carrier against the first side of the metal sheet.

The bent portion of the metal sheet can be bent in a radius, which bending radius is greater than a thickness of the metal sheet in such a way that the bent portion bent along the edge elastically presses against the surface of the second face of the sheet-like information carrier, holding the first face of the sheet-like information carrier against the first side of the metal sheet.

Hereby is achieved that the metal sheet can be fastened to the sheet-like information carrier without use of glue or other kind of adhesive.

The edge is bent in an angle a being 270 degrees or more in relation to an unbent edge of the metal sheet.

Hereby is achieved that it is possible for a first edge part of the edge of the metal sheet to carve into the material of the sheet-like information carrier.

When the edge is bent in an angle a being 270 degree in relation to an unbent edge of the metal sheet, it is possible to provide a contact area corresponding to a material thickness of the metal sheet pressing against the first face of the sheet-like information carrier.

In another aspect, the edge is bent in an angle a being in a range between 270 and 360 degrees in relation to an unbent edge of the metal sheet.

Hereby is achieved that it is possible for a second edge part of the edge of the metal sheet to carve into the material of the sheet-like information carrier.

In another aspect the edge is bent in an angle a being 360 degrees in relation to an unbent edge of the metal sheet.

Hereby is achieved that it is possible to provide a resilient contact area of the second edge part of the portion of the metal sheet pressing against the first face of the sheet-like information carrier.

In another aspect the edge is bent in an angle a being more than 360 degrees in relation to an unbent edge of the metal sheet.

Hereby is achieved that it is possible to provide a resilient contact of the portion of metal sheet pressing against the first face of the sheet-like information carrier.

Also provided is a book or booklet cover including a metal sheet supporting a sheet-like information carrier, which sheet has a first face and an opposite second face, with the first face of the sheet on a first side of a metal sheet, the metal sheet having a portion that extends beyond at least one edge of the sheet, where the portion of the metal sheet has a rounded bend along an edge thereof, the portion elastically pressing against said sheet, and that the metal sheet has an edge bent in an angle a of 270 degrees or more in relation to an unbent edge of the metal sheet.

In an example of the book or booklet cover, not forming part of the scope of the appended claims, the metal sheet has an edge bent in an angle a in a range between 180 and 270 degrees in relation to an unbent edge of the metal sheet.

Hereby is achieved that it is possible for a first edge part of the edge of the metal sheet to carve into the material of the sheet-like information carrier.

In another aspect, the metal sheet has an edge bent in an angle being 270 degrees in relation to an unbent edge of the metal sheet.

Hereby is achieved that it is possible to provide a contact area corresponding to a material thickness of the metal sheet pressing against the first face of the sheet-like information carrier.

In another aspect, the metal sheet has an edge bent in an angle a in a range between 270 and more than 360 degrees in relation to an unbent edge of the metal sheet.

Hereby is achieved that it is possible to provide a resilient contact of the portion of metal sheet pressing against the first face of the sheet-like information carrier or possible for a second edge part of the edge of the metal sheet to carve into the material of the sheet-like information carrier.

Effects and features of the different embodiments are to a large extent analogous to those described above in connection with the first embodiment.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the appended claims.

Hence, it is to be understood that the herein disclosed disclosure is not limited to the particular component parts of the device described or steps of the methods described since such device and method may vary, whilst remaining within the scope of the appended claims. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows an example of a machine with a tool capable of bending portion of a flat article in a rounded way along an edge of another flat article, where the two flat articles are placed in the tool;
Figure 2 shows the machine with the tool beginning bending the portion rounding the edge of the first flat article around the edge of the other article;
Figure 3 shows the machine with the tool finishing rounding the edge of the first flat article around the edge of the other article;
Figure 4 shows the machine with the tool releasing an item with a finished rounding the edge of the first flat article around the edge of the other article;
Figure 5 shows schematically a sheet-like information carrier placed on a metal sheet before processing the portion of the metal sheet;
Figure 6 shows schematically the sheet-like information carrier placed on a metal sheet with the rounded edge of the metal sheet pressing against the sheet-like information carrier;
Figure 7 shows schematically an embodiment of the sheet-like information carrier placed on a metal sheet with the rounded edge of the metal sheet pressing against the sheet-like information carrier;
Figure 8 shows schematically another embodiment of the sheet-like information carrier placed on a metal sheet with the rounded edge of the metal sheet pressing against the sheet-like information carrier;
Figure 9 shows schematically another embodiment of the sheet-like information carrier placed on a metal sheet with the rounded edge of the metal sheet pressing against the sheet-like information carrier; and
Figure 10 shows schematically another embodiment of the sheet-like information carrier placed on a metal sheet with the rounded edge of the metal sheet pressing against the sheet-like information carrier.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure, as claimed in the appended claims, to the skilled person.

A method of making a book or booklet cover including a metal sheet 2 supporting a sheet-like information carrier 1 can be carried out as follows.

A first face 4 of the sheet-like information carrier 1 is placed on a first side 5 of the metal sheet 2, in such a way that the metal sheet 2 extends at least beyond one edge 10 of the sheet 1. Then a portion 11 of the metal sheet 2 is bent in a rounding way along an edge of the metal sheet 2, for said portion 11 to bear against and to elastically press on said sheet-like information carrier 1. In some embodiments this is sufficient to hold the sheet-like information carrier 1 firmly in the metal sheet 2 by the pressure of the bended portion 11. In other embodiments abutting edges of the metal sheet 2 can be bent to more firmly hold the sheet-like information carrier 1 within the metal sheet 2.

When bending in a rounding way a portion 11 of the metal sheet 2 along an edge thereof, for said portion 11 to bear against and to elastically press on said sheet 1 the book or booklet cover is formed, where the edge 7 is bent in an angle of 270 degrees or more in relation to an unbent edge of the metal sheet 2.

In an example of the method, not forming part of the scope of the appended claims, the edge 7 is bent in an angle a being in a range between 180 and 270 degrees in relation to an unbent edge of the metal sheet 2, with the effect that a first edge part 8 of the edge 7 of the metal sheet 2 can carve into the material of the sheet-like information carrier 1, providing a holding force.

In another embodiment, the edge 7 is bent in an angle a being 270 degree in relation to an unbent edge of the metal sheet 2, with the effect that it is possible to provide a contact area corresponding to a material thickness of the metal sheet 2 pressing against a second face 3 of the sheet-like information carrier 1, thereby squeezing the sheet-like information carrier 1 between the edge 7 of the rounded portion 11 of the metal sheet 2 and the first side 5 of the metal sheet 2, providing a holding force.

In another embodiment, the edge 7 is bent in an angle a being in a range between 270 and 360 degrees in relation to an unbended edge of the metal sheet 2, with the effect that it is possible for a second edge part 9 of the edge 7 of the metal sheet 2 to carve into the material of the sheet-like information carrier 1, providing a holding force.

In another embodiment, the edge 7 is bent in an angle a being 360 degrees in relation to an unbent edge of the metal sheet 2, with the effect that it is possible to provide a resilient contact area of the second edge part 9 of the portion 11 of the metal sheet 2 pressing against the second face 3 of the sheet-like information carrier 1, providing a holding force.

In another embodiment, the edge 7 is bent in an angle a being more than 360 degrees in relation to an unbent edge of the metal sheet 2, with the effect that it is possible to provide a resilient contact of the portion 11 of the metal sheet 2 pressing against the second face 3 of the sheet-like information carrier 1, providing a holding force.

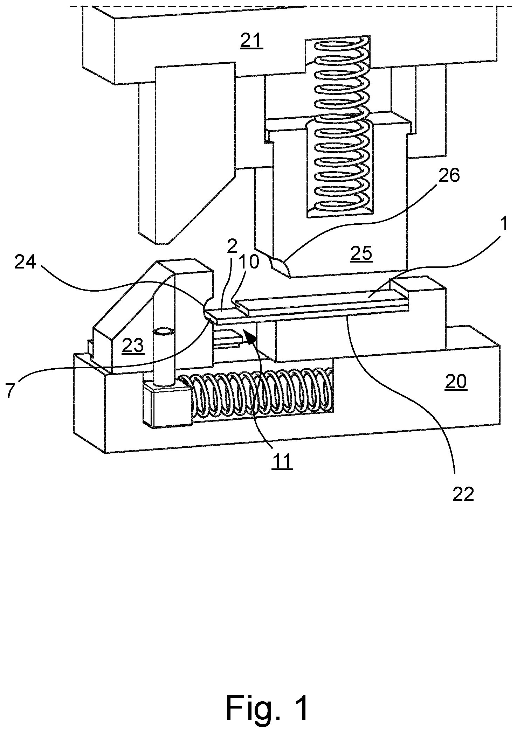

An example of a machine with a tool for bending a portion of a metal sheet in a rounded way around an edge portion of a sheet-like information carrier is shown in figure 1 to 4, showing different stages during the process.

This is just for mentioning one example, different tools may perform the same bend.

In figure 1 the tool comprises a lower part 20 and an upper part 21, the lower part 20 comprising a support surface 22 on which the articles 1, 2 for forming the book or booklet cover is placed and a first tool part 23 having a grove 24 for performing the rounded bending of the portion 11 of the metal sheet 2. The upper part 21 comprises a second tool part 25 comprising an inwardly rounded edge 26 for completing the rounding of the portion 11 of the metal sheet 2, when the tool parts 23, 25 are put together.

When moving the upper part 21 towards the lower part 20, the first tool part 23 is moved towards the edge 7 of the metal sheet 2 and the portion 11 is forced along the rounding in the grove 24 thereby being bent in a rounded way. The traveling distance of the first tool part 23 determines how much of the portion 11 to be bent and the dimension of the grove determines the dimension of the bent edge portion.

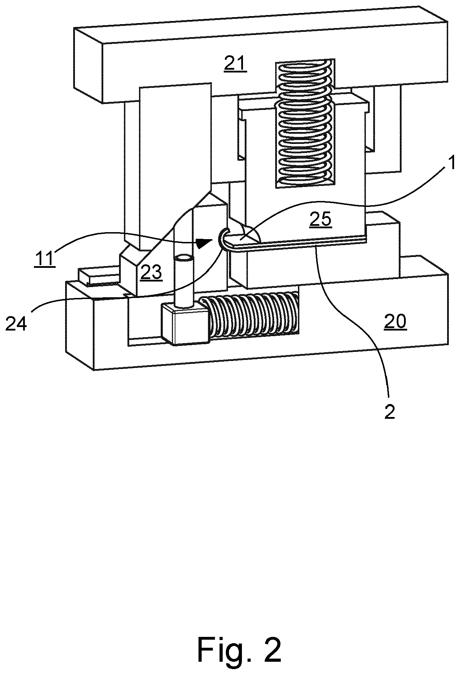

In figure 2, the first tool part 23 is moved towards the second tool part 25 and the portion 11 of the metal sheet 2 is beginning the bending.

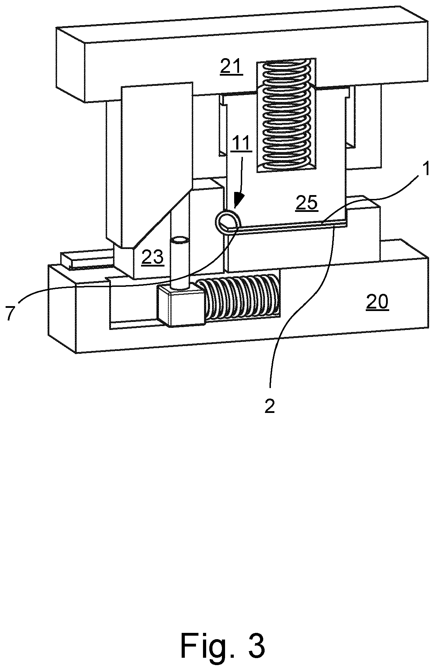

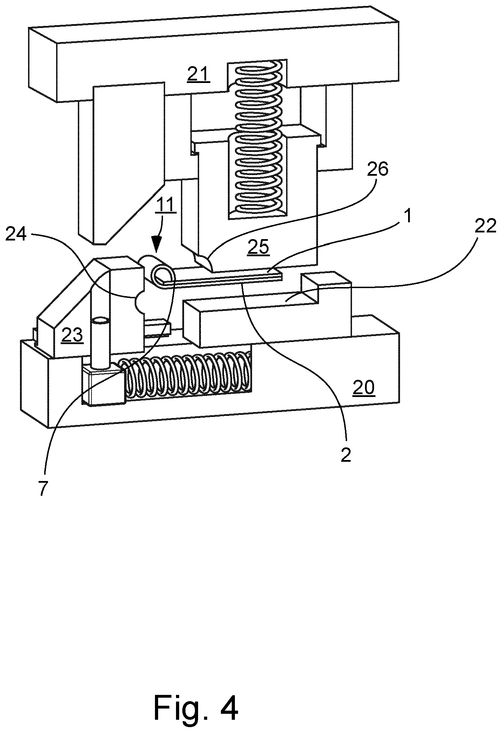

In figure 3, the bending is completed and in figure 4, the tool parts 23, 25 are moved apart from each other and the end product can be seen.

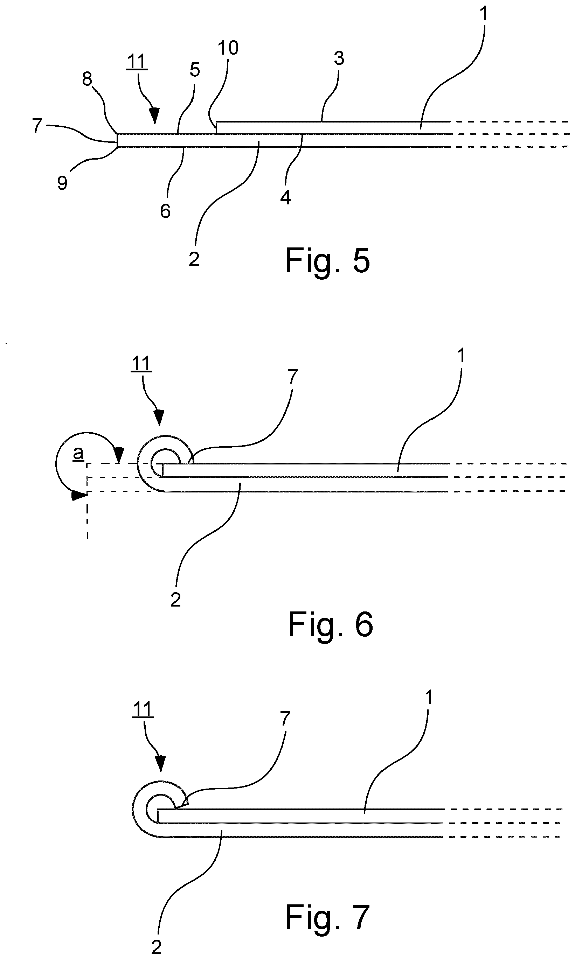

Figure 5 shows a sheet-like information carrier 1 placed on a metal sheet 2 before being joined in an edge portion. The sheet 1 comprises a first face 4 and an opposite second face 3, where the first face is placed against a first side 5 of the metal sheet 2. The metal sheet 2 has an opposite second side 6, which second side rest on the support surface 22 of the tool during bending. A portion 11 of the metal sheet 2 comprises an edge 7 having a first edge part 8 and a second edge part 9. The sheet 1 shows an edge 10.

The product obtained by completion of the process is a book or booklet cover including a metal sheet 2 supporting a sheet-like information carrier 1, which sheet 1 has a first face 4 and an opposite second face 3, with the first face 4 of the sheet 1 on a first side 5 of a metal sheet 2, the metal sheet 2 having a portion 11 that extends beyond at least one edge 10 of the sheet 1, where the portion 11 of the metal sheet 2 has a rounded bend along an edge thereof, the portion 11 elastically pressing against said sheet 1.

In an example, not forming part of the claimed invention, as shown in figure 7, the metal sheet 2 has an edge 7 which is bent in an angle a in a range between 180 and 270 degrees in relation to an unbent edge of the metal sheet 2. Hereby the first edge 8 carves into the sheet 1 forming a better grip than if the edge 7 of the metal sheet 2 was just folded around the edge of the sheet 1.

In an embodiment as shown in figure 6, the metal sheet 2 has an edge 7 which is bent in an angle a being 270 degree in relation to an unbent edge of the metal sheet 2. The angle a mentioned in the different embodiments are indicated in figure 6, which angle a refers to an angular position of the edge 7 compared to an unbent edge of the metal sheet 2.

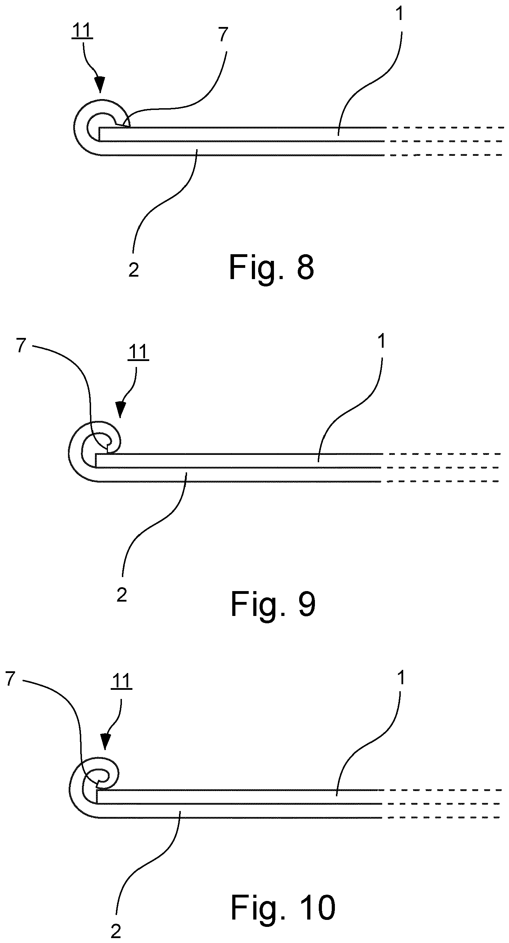

In embodiments as shown in figures 8, 9 and 10, the metal sheet 2 has an edge 7 which is bent in an angle a being more than 360 degrees (figure 10), preferable 360 degrees (figure 9), more preferable in a range between 270 and 360 degrees (figure 8) in relation to an unbent edge of the metal sheet 2.

As shown in figure 8, the second edge 9 carves into the sheet 1 forming a better grip than if the edge 7 of the metal sheet 2 was just folded around the edge of the sheet 1.

Hereby it is possible to retain the sheet-like information carrier 1 in relation to a metal sheet 2, where a portion 11 that extends beyond at least one edge 10 of the sheet 1, where the portion 11 of the metal sheet 2 has a rounded bend along an edge thereof, the portion 11 elastically pressing against said sheet 1 and thereby attaching the two parts together without need to use any adhesive material.

The first side or page of the sheet-like information carrier can be of same thickness as the rest of the pages in the book or booklet, or the first side or page can be thicker than the rest of the pages in the book or booklet. The same apply to the last side or page.

Bending in a rounding way should be understood as when the edge of the metal sheet is bent, the side which is bend around the bending edge is rounded and do not form a plane inner surface. Hereby is achieved that the edge which is now bent more than 180 degrees in relation to its initial position will be able to press against a sheet or the like on which the metal sheet 2 is placed to cover, without the inner portion of the bent edge pressing against the inner sheet. The part forming contact with the inner sheet is the edge of the metal sheet 2 or the corner lines of the edge.

In figures 6 to 10 it is shown that a hollow channel is formed in the edge portion of the cover.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A method of making a book or booklet cover including a metal sheet (2) supporting a sheet-like information carrier (1) comprising the steps of:
- placing a first face (4) of the sheet-like information carrier (1) on a first side (5) of the metal sheet (2), which metal sheet (2) extends at least beyond one edge (10) of the sheet-like information carrier (1);
- bending in a rounding way a portion (11) of the metal sheet (2) along an edge (7) thereof, for said portion (11) to bear against and to elastically press on said sheet-like information carrier (1), thereby forming the book or booklet cover, wherein the edge (7) is bent in an angle of 270 degrees or more in relation to an unbent edge of the metal sheet (2).

2. The method according to claim 1, wherein the edge (7) is bent in an angle (a) being in a range between 270 and 360 degrees in relation to an unbent edge (7) of the metal sheet (2).

3. The method according to claim 1, wherein the edge (7) is bent in an angle (a) being 360 degrees in relation to an unbent edge of the metal sheet (2).

4. The method according to claim 1, wherein the edge (7) is bent in an angle (a) being more than 360 degrees in relation to an unbent edge of the metal sheet (2).

5. A book or booklet cover for a book or booklet including a sheet-like information carrier, said book or booklet cover including a metal sheet (2) suitable for supporting a sheet-like information carrier (1) having a first face (4) and an opposite second face (3), the first face (4) of the sheet (1) being suitable for being placed on a first side (5) of the metal sheet (2), the metal sheet (2) having a portion (11) that is such that, when the sheet-like information carrier is placed on the metal sheet, the portion of the metal sheet extends beyond at least one edge (10) of the sheet-like information carrier (1), **characterized in that** the portion (11) of the metal sheet (2) has a rounded bend along an edge thereof, said portion (11), in use, elastically pressing against the sheet-like information carrier (1), and **in that** the metal sheet (2) has an edge (7) bent in an angle (a) of 270 degrees or more in relation to an unbent edge of the metal sheet (2).

6. The book or booklet cover according to claim 5, wherein the metal sheet (2) has an edge (7) bent in an angle (a) in a range between 270 degrees and more than 360 degrees in relation to an unbent edge of the metal sheet (2).

7. The book or booklet cover according to claim 5, wherein the metal sheet (2) has an edge (7) bent in an angle (a) being 360 degrees in relation to an unbent edge of the metal sheet (2).

## Patentansprüche

1. Verfahren zur Herstellung einer Buch- oder Broschürenabdeckung, beinhaltend ein Metallblech (2), das einen blattartigen Informationsträger (1) stützt, das die folgenden Schritte umfasst:
- Platzieren einer ersten Fläche (4) des blattartigen Informationsträgers (1) auf einer ersten Seite (5) des Metallblechs (2), wobei sich das Metallblech (2) mindestens über den Rand (10) des blattartigen Informationsträgers (1) hinaus erstreckt;
- Rundbiegen eines Abschnitts (11) des Metallblechs (2) entlang eines Randes (7) davon, damit der Abschnitt (11) an dem blattartigen Informationsträger (1) anliegt und elastisch auf ihn zu drücken und dadurch die Buch- oder Broschürenabdeckung auszubilden, wobei der Rand (7) in einem Winkel von 270 Grad oder mehr in Bezug auf einen nicht gebogenen Rand des Metallblechs (2) gebogen wird.

2. Verfahren nach Anspruch 1, wobei der Rand (7) in einem Winkel (a) gebogen wird, der in einem Bereich von 270 und 360 Grad in Bezug auf einen nicht gebogenen Rand (7) des Metallblechs (2) liegt.

3. Verfahren nach Anspruch 1, wobei der Rand (7) in einem Winkel (a) gebogen wird, der bei 360 Grad in Bezug auf einen nicht gebogenen Rand des Metallblechs (2) liegt.

4. Verfahren nach Anspruch 1, wobei der Rand (7) in einem Winkel (a) gebogen wird, der über 360 Grad in Bezug auf einen nicht gebogenen Rand des Metallblechs (2) beträgt.

5. Buch- oder Broschürenabdeckung für ein Buch oder eine Broschüre, beinhaltend einen blattartigen Informationsträger, wobei die Buch- oder Broschürenabdeckung ein Metallblech (2) beinhaltet, das zum Stützen eines blattartigen Informationsträgers (1) geeignet ist, der eine erste Fläche (4) und eine gegenüberliegende, zweite Fläche (3) aufweist, wobei die erste Fläche (4) des Blatts (1) dazu geeignet ist, auf eine erste Seite (5) des Metallblechs (2) platziert zu werden, wobei das Metallblech (2) einen derartigen Abschnitt (11) aufweist, dass sich der Abschnitt des Metallblechs über mindestens einen Rand (10) des blattartigen Informationsträgers (1) hinaus erstreckt, wenn der blattartige Informationsträger auf das Metallblech platziert wird, **dadurch gekennzeichnet, dass** der Abschnitt (11) des Metallblechs (2) eine gerundete Biegung entlang eines Randes davon aufweist, der Abschnitt (11) bei Gebrauch elastisch gegen den blattartigen Informationsträger (1) drückt und dass das Metallblech (2) einen Rand (7) aufweist, der in einem Winkel (a) von 270 Grad oder mehr in Bezug auf einen nicht gebogenen Rand des Metallblechs (2) gebogen ist.

6. Buch- oder Broschürenabdeckung nach Anspruch 5, wobei das Metallblech (2) einen Rand (7) aufweist, der in einem Winkel (a) in einem Bereich von 270 Grad und mehr als 360 Grad in Bezug auf einen nicht gebogenen Rand des Metallblechs (2) gebogen ist.

7. Buch- oder Broschürenabdeckung nach Anspruch 5, wobei das Metallblech (2) einen Rand (7) aufweist, der in einem Winkel (a) gebogen ist, der 360 Grad in Bezug auf einen nicht gebogenen Rand des Metallblechs (2) beträgt.

## Revendications

1. Procédé de fabrication d'une couverture de livre ou de livret comprenant une feuille métallique (2) supportant un support d'informations en forme de feuille (1) comprenant les étapes consistant à :
- placer une première face (4) du support d'informations en forme de feuille (1) sur un premier côté (5) de la feuille métallique (2), laquelle feuille métallique (2) s'étend au moins au-delà d'un bord (10) du support d'informations en forme de feuille (1) ;
- plier de manière arrondie une partie (11) de la feuille métallique (2) le long d'un bord (7) de celle-ci, pour que ladite partie (11) s'appuie contre et appuie élastiquement sur ledit support d'informations en forme de feuille (1), formant ainsi la couverture de livre ou de livret, le bord (7) étant plié selon un angle de 270 degrés ou plus par rapport à un bord non plié de la feuille métallique (2).

2. Procédé selon la revendication 1, dans lequel le bord (7) est plié selon un angle (a) compris entre 270 et 360 degrés par rapport à un bord non plié (7) de la feuille métallique (2) .

3. Procédé selon la revendication 1, dans lequel le bord (7) est plié selon un angle (a) de 360 degrés par rapport à un bord non plié de la feuille métallique (2).

4. Procédé selon la revendication 1, dans lequel le bord (7) est plié selon un angle (a) supérieur à 360 degrés par rapport à un bord non plié de la feuille métallique (2).

5. Couverture de livre ou de livret pour livre ou livret comprenant un support d'informations en forme de feuille, ladite couverture de livre ou de livret comprenant une feuille métallique (2) apte à supporter un support d'informations en forme de feuille (1) présentant une première face (4) et une seconde face opposée (3), la première face (4) de la feuille (1) étant apte à être placée sur un premier côté (5) de la feuille métallique (2), la feuille métallique (2) présentant une partie (11) qui est telle que, lorsque le support d'informations en forme de feuille est placé sur la feuille métallique, la partie de la feuille métallique s'étend au-delà d'au moins un bord (10) du support d' informations en forme de feuille (1), **caractérisée en ce que** la partie (11) de la feuille métallique (2) présente une courbure arrondie le long d'un bord de celle-ci, ladite partie (11), lors de l'utilisation, appuyant élastiquement contre le support d'informations en forme de feuille (1), et **en ce que** la feuille métallique (2) présente un bord (7) plié selon un angle (a) de 270 degrés ou plus par rapport à un bord non plié de la feuille métallique (2).

6. Couverture de livre ou de livret selon la revendication 5, dans laquelle la feuille métallique (2) présente un bord (7) plié selon un angle (a) compris entre 270 degrés et plus de 360 degrés par rapport à un bord non plié de la feuille métallique (2).

7. Couverture de livre ou de livret selon la revendication 5, dans laquelle la feuille métallique (2) présente un bord (7) plié selon un angle (a) de 360 degrés par rapport à un bord non plié de la feuille métallique (2).
